# EUROPEAN PATENT APPLICATION

(11) **EP 3 734 418 A1**
(43) Date of publication of application: **04.11.2020**
(21) Application number: 19172438.4
(22) Date of filing: 03.05.2019
(51) Int. Cl.: G06F 3/01, G06F 3/0481

(54) **HEAD MOUNTED DISPLAY SYSTEM CAPABLE OF DISPLAYING A VIRTUAL SCENE AND A MAP OF A REAL ENVIRONMENT IN A PICTURE-IN-PICTURE MODE, RELATED METHOD AND RELATED NON-TRANSITORY COMPUTER READABLE STORAGE MEDIUM**

(71) Applicant: XRSpace CO., LTD., Taoyuan City 330 (TW)
(72) Inventor: Wang, Tzu-Chiang, 260 Yilan County (TW); Lee, Chia-Chun, 106 Taipei City (TW); Li, Si-Ying, 946 Pingtung County (TW); Chen, Wei-Shuo, 807 Kaohsiung City (TW)
(74) Representative: Straus, Alexander

(57) **Abstract**

The present disclosure discloses a head mounted display system (1, 1', 1", 1''', 1'''') including a tracking unit (14, 14', 14", 14''', 14''''), a display unit (12, 12', 12", 12''', 12"") and a processing unit (13, 13', 13", 13''', 13"") coupled to the tracking unit (14, 14', 14", 14''', 14"") and the display unit (12, 12', 12", 12''', 12""). The tracking unit (14, 14', 14", 14''', 14"") is for tracking at least one of a position, an orientation and a pose of the head mounted display system (1, 1', 1", 1''', 1 "") and further generating a tracking result. The display unit (12, 12', 12", 12''', 12"") is for displaying a virtual scene and a map of the real environment based on the tracking result in a picture-in-picture mode. The present disclosure allows a user to see the virtual scene and the map of the real environment in the picture-in-picture mode synchronously and help the user to understand a current position or a current state of the user in the real environment, which effectively ensures the user's safety and prevents injuries caused by collision when the user experiences the virtual environment.

## Description

### Field of the Invention

The present disclosure relates to a head mounted display system capable of displaying a virtual scene and a map of a real environment synchronously in a picture-in-picture mode, a related method and a related non-transitory computer readable storage medium according to the pre-characterizing clauses of claims 1, 9 and 15.

### Background of the Invention

With the advancement and development of technology, the demand of interactions between a computer game and a user is increased. Human-computer interaction technology, e.g. somatosensory games, virtual reality (VR) environment, augmented reality (AR) environment, mixed reality (MR) environment and extended reality (XR) environment, becomes popular because of its physiological and entertaining function. A conventional display apparatus, such as a head mounted display (HMD), usually can only display a virtual scene of a virtual environment in a full-screen mode. Therefore, a user cannot understand a position or a state of the user in the real environment, which may cause a potential safety hazard when the user experiences the virtual environment.

### Summary of the Invention

This is mind, the present disclosure aims at providing a head mounted display system capable of a virtual scene and a map of a real environment synchronously in a picture-in-picture mode synchronously, a related method and a related non-transitory computer readable storage medium for helping a user to understand a current position or a current state of the user in the real environment.

This is achieved by a head mounted display system capable of displaying a virtual scene and a map of a real environment synchronously in a picture-in-picture mode synchronously, a related method and a related non-transitory computer readable storage medium according to claims 1, 9 and 15. The dependent claims pertain to corresponding further developments and improvements.

As will be seen more clearly from the detail description following below, the claimed head mounted display system includes a wearable body, a tracking unit, a display unit and a processing unit. The wearable body is configured to be worn by a user. The tracking unit is configured to track at least one of a position of the wearable body, an orientation of the head mounted display system and a pose of the head mounted display system and further to generate a tracking result. The display unit is mounted on the wearable body and configured to display a virtual scene and a map of a real environment based on the tracking result of the tracking unit in a picture-in-picture mode. The processing unit is coupled to the display unit and the tracking unit.

Furthermore, the claimed method of utilizing a head mounted display system to display a virtual scene and a map of a real environment in a picture-in-picture mode includes utilizing a tracking unit of the head mounted display system to track at least one of a position of the head mounted display system, an orientation of the head mounted display system and a pose of the head mounted display system and further to generate a tracking result; and utilizing a display unit of the head mounted display system to display the virtual scene and the map of the real environment based on the tracking result of the tracking unit in the picture-in-picture mode.

Besides, the claimed non-transitory computer readable storage medium stores a program that causes the aforementioned head mounted display system to execute the aforementioned method.

In summary, the present disclosure utilizes the display unit to display the virtual scene in the full-screen mode or display the virtual scene and the map of the real environment combined in a same video frame synchronously in the picture-in-picture mode and further utilizes the processing unit to indicate the display unit to switch between the full-screen mode and the picture-in-picture mode in response to the activating command. Therefore, it allows a user to switch the display unit between the full-screen mode and the picture-in-picture mode by different ways to help the user to understand a current position or a current state of the user in a real environment, which effectively ensure the user's safety and prevents injuries caused by collision when the user experiences the virtual environment.

These and other objectives of the present invention will no doubt become obvious to those of ordinary skill in the art after reading the following detailed description of the preferred embodiment that is illustrated in the various figures and drawings.

### Brief Description of the Drawings

In the following, the disclosure is further illustrated by way of example, taking reference to the accompanying drawings. Thereof
FIG. 1 is a diagram of a head mounted display system according to a first embodiment of the present disclosure,
FIG. 2 is a functional block diagram of the head mounted display system according to the first embodiment of the present disclosure,
FIG. 3 is a flow chart diagram illustrating a method of switching the head mounted display system between a full-screen mode and a picture-in-picture mode according to the first embodiment of the present disclosure,
FIG. 4 is a diagram illustrating a display unit displays a virtual scene in the full-screen mode according to the first embodiment of the present disclosure,
FIG. 5 is a diagram illustrating the display unit displays the virtual scene and a map of real environment in the picture-in-picture mode according to the first embodiment of the present disclosure,
FIG. 6 is a diagram of a head mounted display system according to a second embodiment of the present disclosure,
FIG. 7 is a functional block diagram of the head mounted display system according to the second embodiment of the present disclosure,
FIG. 8 is a flow chart diagram illustrating a method of switching the head mounted display system between a full-screen mode and a picture-in-picture mode according to the second embodiment of the present disclosure,
FIG. 9 is a diagram of a head mounted display system according to a third embodiment of the present disclosure,
FIG. 10 is a functional block diagram of the head mounted display system according to the second embodiment of the present disclosure,
FIG. 11 is a flow chart diagram illustrating a method of switching the head mounted display system between a full-screen mode and a picture-in-picture mode according to the third embodiment of the present disclosure,
FIG. 12 is a diagram of a head mounted display system according to a fourth embodiment of the present disclosure,
FIG. 13 is a functional block diagram of the head mounted display system according to the fourth embodiment of the present disclosure,
FIG. 14 is a flow chart diagram illustrating a method of switching the head mounted display system between a full-screen mode and a picture-in-picture mode according to the fourth embodiment of the present disclosure,
FIG. 15 is a diagram of a head mounted display system according to a fifth embodiment of the present disclosure,
FIG. 16 is a functional block diagram of the head mounted display system according to the fifth embodiment of the present disclosure, and
FIG. 17 is a flow chart diagram illustrating a method of switching the head mounted display system between a full-screen mode and a picture-in-picture mode according to the fifth embodiment of the present disclosure.

### Detailed Description

Certain terms are used throughout the description and following claims to refer to particular components. As one skilled in the art will understand, electronic equipment manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to..." In addition, to simplify the descriptions and make it more convenient to compare between each embodiment, identical components are marked with the same reference numerals in each of the following embodiments. Please note that the figures are only for illustration and the figures may not be to scale. Also, the term "couple" is intended to mean either an indirect or direct electrical/mechanical connection. Thus, if a first device is coupled to a second device, that connection may be through a direct electrical/mechanical connection, or through an indirect electrical/mechanical connection via other devices and connections.

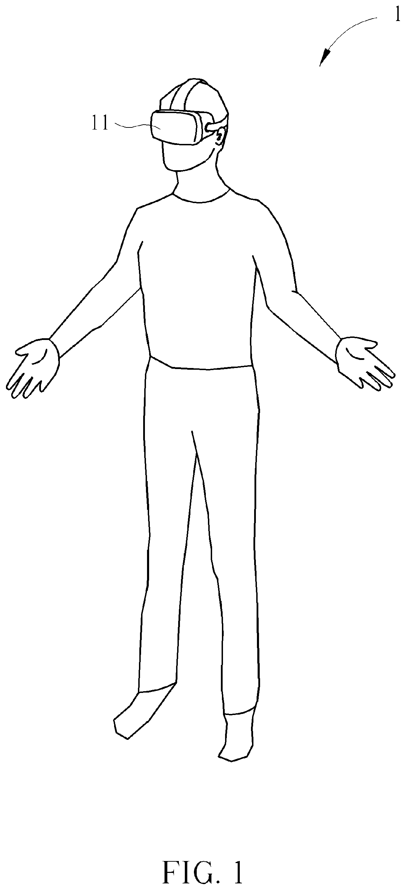

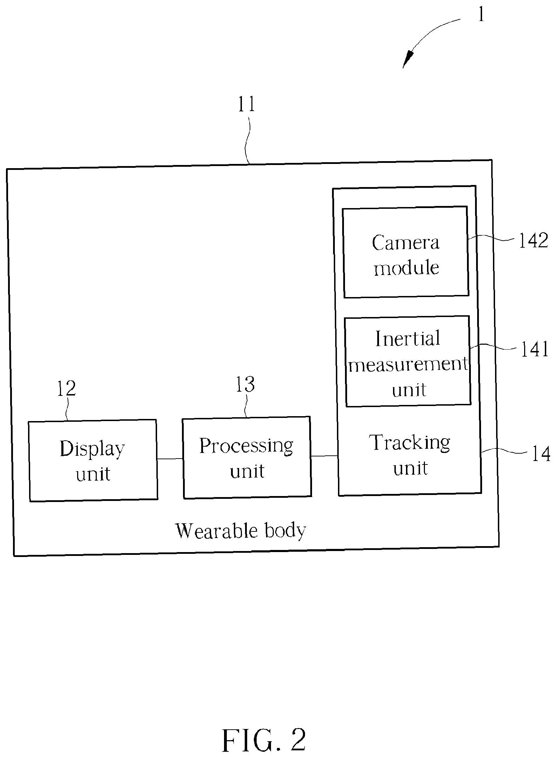

Please refer to FIG. 1 and FIG. 2. FIG. 1 is a diagram of a head mounted display system 1 according to a first embodiment of the present disclosure. FIG. 2 is a functional block diagram of the head mounted display system 1 according to the first embodiment of the present disclosure. As shown in FIG. 1 and FIG. 2, the head mounted display system 1 includes a wearable body 11, which can be worn by a user, a display unit 12, a processing unit 13 and a tracking unit 14.

The display unit 12 can be mounted on the wearable body 11. The display unit 12 is configured to display a virtual scene of a virtual environment in a full-screen mode or display the virtual scene of the virtual environment and a map of a real scene of a real environment combined in a same video frame synchronously in a picture-in-picture mode. The display unit 12 can switch from the full-screen mode to the picture-in-picture mode, and/or to switch from the picture-in-picture mode to the full-screen mode. In this embodiment, the display unit 12 can be a liquid crystal display (LCD), light-emitting diode (LED) display, an organic light-emitting diode (OLED) display, or any other display. However, the present disclosure is not limited thereto.

The processing unit 13 can be mounted inside the wearable body 11 and coupled to the display unit 12 and the tracking unit 14. The processing unit 13 is configured to process data of the display unit 12 and the tracking unit 14 and to indicate the display unit 12 to switch from the full-screen mode to the picture-in-picture mode, and/or to switch from the picture-in-picture mode to the full-screen mode in response to an activating command. In this embodiment, the processing unit 13 can be implemented in software, firmware, hardware configuration, or a combination thereof. For example, the processing unit 13 can be a processor, such as a central processing unit, an application processor, a microprocessor, etc., or can be realized by application specific integrated circuits (ASIC). However, the present disclosure is not limited thereto.

The tracking unit 14 is configured to track a position, an orientation or a pose of the head mounted display system 1. In this embodiment, the tracking unit 14 can include an inertial measurement unit (IMU) 141 mounted inside the wearable body 11, such as a gyroscope, an accelerometer, a magnetic sensor or a combination thereof, for tracking at least one of a position, an orientation and a pose of the wearable body 11 to determine the position, the orientation or the pose of the head mounted display system 1. However, the present disclosure is not limited to this embodiment. The inertial measurement unit can be mounted a component another than the wearable body. For example, in another embodiment, the tracking unit 14 can further include a hand sensor, a lower body sensor or an external camera module, and the inertial measurement unit can be mounted the hand sensor, the lower body sensor or the external camera module, for tracking a position, an orientation or a pose of the hand senor, the lower body sensor or the external camera module to determine the position, the orientation or the pose of the head mounted display system 1.

The tracking unit 14 can further include a camera module 142 for capturing images of the real environment, so as to generate a tracking result according to the captured images of the real environment and at least one of a position, an orientation and a pose of the wearable body 11, so that the map of the real environment can be built based on the tracking result of the tracking unit 14 by the simultaneous localization and mapping (SLAM) technology.

However, the present disclosure is not limited thereto. For example, in another embodiment, the inertial measurement unit can be omitted, and the position, the orientation and the pose of the head mounted display system can be determined by the imaged captured by the camera module of the tracking unit. Alternatively, in another embodiment, the camera module of the tracking unit can be omitted, and the map of the real environment can be built based on predetermined map information and the tracking result of the tracking unit without capturing images of the real environment.

Furthermore, in this embodiment, the tracking unit 14 is configured to collect data not only for building the map of the real environment but also for determining generation of the activating command. For example, the activating command can be generated when the tracking result of the tracking unit 14 meets a predetermined condition. However, determination of generation of the activating command is not limited to this embodiment. In another embodiment, which will be described later, the data collected from the tracking unit 14 may not be used to determine generation of the activating command.

Besides, in this embodiment, the determination of the generation of the activating command and the generation of the activating command can be performed by the tracking unit 14. However, the present disclosure is not limited thereto. In another embodiment, the tracking unit can transmit the collected data or the tracking result to the processing unit disposed on the wearable body, and the determination of the generation of the activation command and the generation of the activating command can be performed by processing unit disposed on the wearable body.

In this embodiment, the display unit 12, the processing unit 13 and the tracking unit 14 are disposed on the wearable body 11. However, the present disclosure is not limited to this embodiment. For example, in another embodiment, the head mounted display system can further include a remote computing apparatus disposed away from the wearable body separately and a communication module disposed on the wearable body for constructing a communication channel to the remote computing apparatus. The remote computing apparatus can be an edge computing device, a cloud computing device, a local host computer, a remote sever, a smartphone, or the like. The communication module can establish a wired connection or a wireless connection between elements on the wearable body and elements on the remote computing apparatus. In this embodiment, at least one of the processing unit and the tracking unit can be at least partly disposed or configured on the remote computing apparatus other than the wearable body and/or distributes part of the tasks to the remote computing apparatus, so that the remote computing apparatus can receive the tracking result of the tracking unit to build the map of the real environment based on the tracking result of the tracking unit or transmit at least one of the activating command, the images of the real environment and the map of the real environment via the communication module, so as to reduce the size of the wearable body and calculation of the processing unit disposed on the wearable body, which makes the wearable body lightweight and portable.

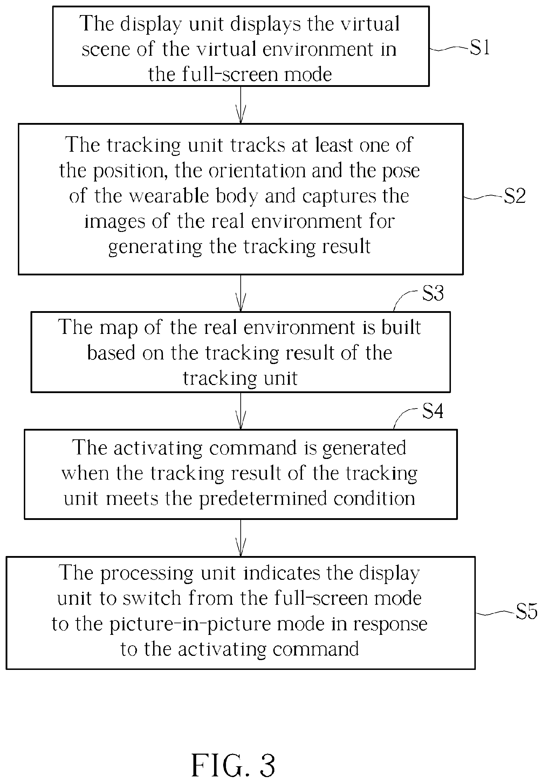

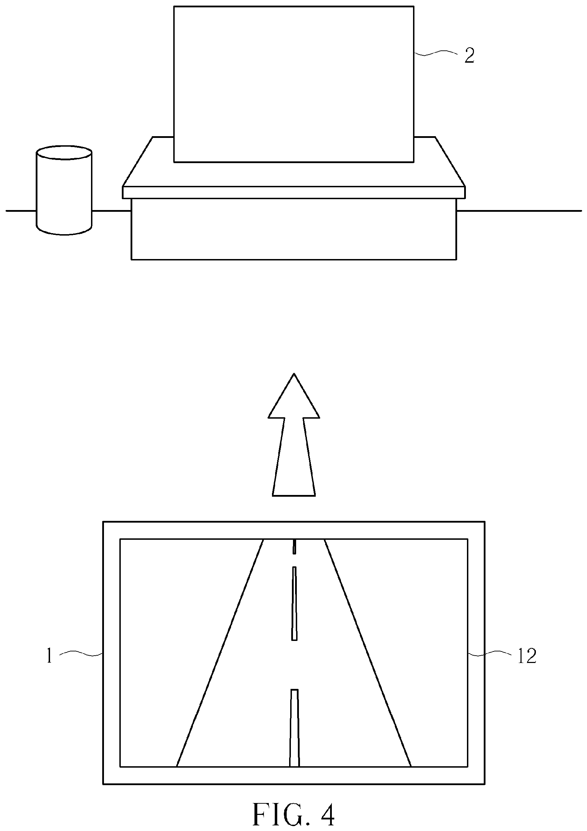

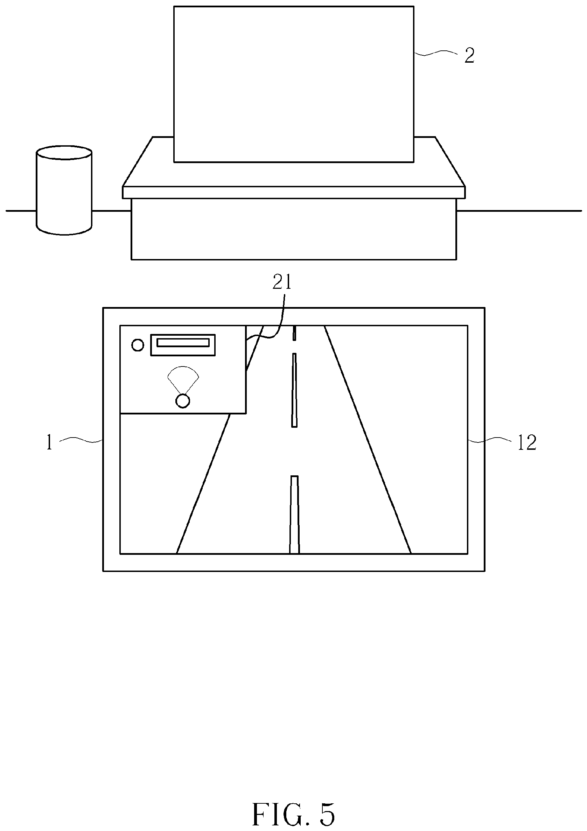

Please refer to FIG. 3 to FIG. 5. FIG. 3 is a flow chart diagram illustrating a method of switching the head mounted display system 1 between the full-screen mode and the picture-in-picture mode according to the first embodiment of the present disclosure. FIG. 4 is a diagram illustrating the display unit 12 displays the virtual scene in the full-screen mode according to the first embodiment of the present disclosure. FIG. 5 is a diagram illustrating the display unit 12 displays the virtual scene and the real environment in the picture-in-picture mode according to the first embodiment of the present disclosure. As shown in FIG. 3, the method includes the following steps:
S1: The display unit 12 displays the virtual scene of the virtual environment in the full-screen mode.
S2: The tracking unit 14 tracks at least one of the position, the orientation and the pose of the head mounted display system 1 and captures the images of the real environment for generating the tracking result.
S3: The map of the real environment is built based on the tracking result of the tracking unit 14.
S4: The activating command is generated when the tracking result of the tracking unit 14 meets the predetermined condition.
S5: The processing unit 13 indicates the display unit 12 to switch from the full-screen mode to the picture-in-picture mode in response to the activating command.

Detailed description for the steps is provided as follows. In step S1, when the user wears the wearable body 11, the display unit 12 can display the virtual scene of the virtual environment in the full-screen mode for the user firstly, as shown in FIG. 4. In steps S2 to S4, when the user experiences the virtual environment, meanwhile the tracking unit 14 can track at least one of the position, the orientation and the pose of the head mounted display system 1 by tracking at least one of the position, the orientation and the pose of the wearable body 11 in the real environment and capture the images of the real environment for generating the tracking result according to the at least one of the position, the orientation and the pose of the head mounted display system and the captured images of the real environment, so that the map of the real environment can be built based on the tracking result of the tracking unit. Furthermore, the activating command is generated when the tracking result of the tracking unit 14 meets the predetermined condition. The predetermined condition can be determined according to a relation between the head mounted display system 1 and the real environment.

For example, the predetermined condition can refer to that a distance between the wearable body 11 worn by the user and a real object, such as a television 2 which is shown in FIG. 4 and FIG. 5, or a wall, in the real environment is equal to or less than a predetermined distance. The predetermined distance can preferably be 50 centimeters. In other words, when the distance between the wearable body 11 and the real object in the real environment is equal to or less than 50 centimeters during movement of the user, the activating command is generated, which can provide a warning message for the user to avoid collision.

However, the predetermined condition is not limited thereto. In another embodiment, the predetermined condition can refer to a predetermined orientation or a predetermined pose, and the activating command can be generated when the orientation or the pose of the head mounted display system tracked by the tracking unit meets the predetermined orientation or the predetermine pose.

Alternatively, in another embodiment, which will be described later, the tracking unit can include a camera module, a hand sensor worn on the user's hand, a lower body sensor worn on the user's lower body, or a combination thereof for determining a hand gesture of the user, a hand movement of the user or a lower body movement of the user, and the predetermined condition can be a predetermined hand gesture, a predetermined hand movement, a predetermined lower body movement, or a combination thereof, and the activating command can be generated when the hand gesture, the hand movement, or the lower body movement of the user tracked by the tracking unit meets the predetermined hand gesture, the predetermined hand movement, or the predetermined lower body movement.

Afterwards, in step S5, the processing unit 13 can indicate the display unit 12 to switch from the full-screen mode, as shown in FIG. 4, to the picture-in-picture mode, as shown in FIG. 5, in response to the activating command, so as to allow the user to see the virtual scene and the map of the real environment combined in the same video frame at the same time and help the user to understand a current position or a current state of the user in the real environment, which effectively ensure the user's safety and prevents injuries caused by collision when the user experiences the virtual environment.

Besides, a size of a window 21 of the map, a location of the window 21 of the map, a scale of the map, an orientation of the map or a view of the map can be adjusted when the tracking result of the tracking unit 14 meets a predetermined condition. For example, the user can adjust the size of the windows 21, the location of the windows 21, the scale of the map, the orientation of the map, or a view of the map by a specific hand gesture and/or a specific hand movement. For another example, the size of the windows 21, the location of the windows 21, the scale of the map, the orientation of the map, or a view of the map can be auto-adjusted based on a tracking result (for example, an eye tracking result) of the tracking unit 14 for providing better user experience.

Understandably, if the distance between the wearable body 11 and the real object increases again and is greater than the predetermined distance, such as 50 centimeters, the display unit can be switched from the picture-in-picture mode to the full-screen mode for enhancing the immersive experience.

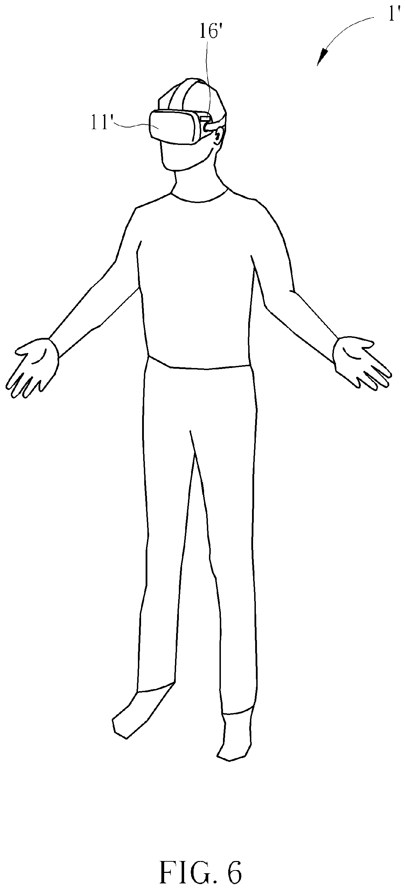

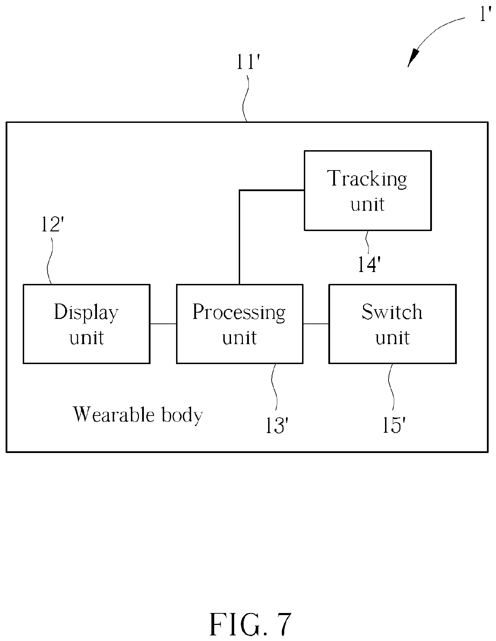

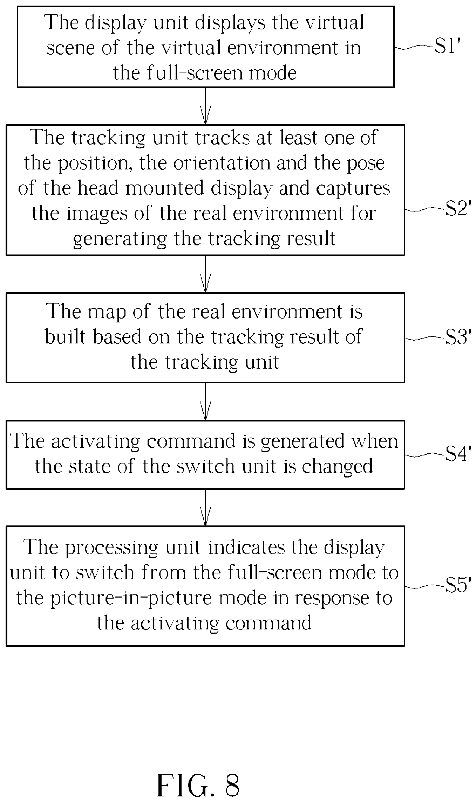

Please refer to FIG. 6 to FIG. 8. FIG. 6 is a diagram of a head mounted display system 1' according to a second embodiment of the present disclosure. FIG. 7 is a functional block diagram of the head mounted display system 1' according to the second embodiment of the present disclosure. FIG. 8 is a flow chart diagram illustrating a method of switching the head mounted display system 1' between a full-screen mode and a picture-in-picture mode according to the second embodiment of the present disclosure. As shown in FIG. 6 to FIG. 8, different from the head mounted display system 1 of the first embodiment, the head mounted display system 1' of this embodiment includes a wearable body 11', a display unit 12', a processing unit 13', a tracking unit 14' and a switch unit 15'. The tracking unit 14' and the display unit 12' are disposed on the wearable body 11'. The processing unit 13' can be disposed on the wearable body 11' and coupled to the display unit 12' and the tracking unit 14'. The switch unit 15' is disposed on the wearable body 11' and coupled to the processing unit 13' for generating the activating command when a state of the switch unit 15' is changed. In other words, in this embodiment, the user can switch the display unit 12' from the full-screen mode to the picture-in-picture mode by changing the state of the switch unit 15' according to practical demands. Furthermore, understandably, the user can switch the display unit 12' from the picture-in-picture mode to the full-screen mode by changing the state of the switch unit 15' again. Besides, in this embodiment, the switch unit 15' can include a physical button on the wearable body 11', and the state of the switch unit 15' can be changed by pressing or clicking the physical button. However, the present disclosure is not limited thereto. In another embodiment, the switch unit also can be a virtual button on the wearable body or displayed by the display unit and be activated or deactivated by touch operation.

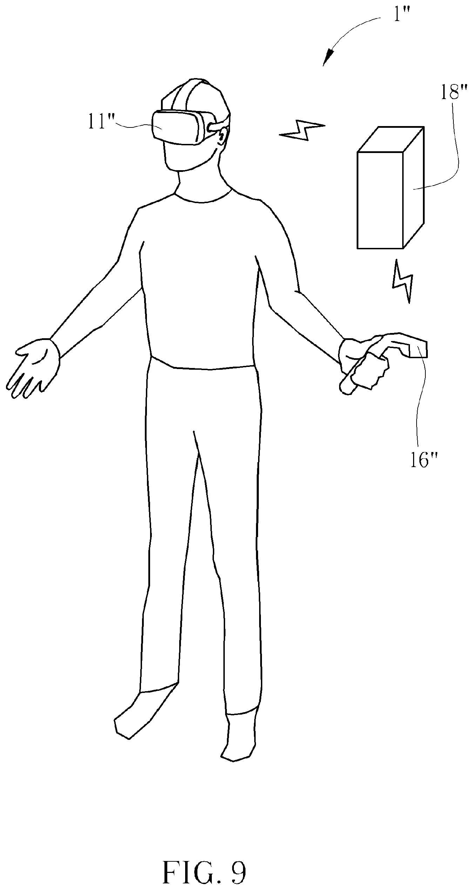

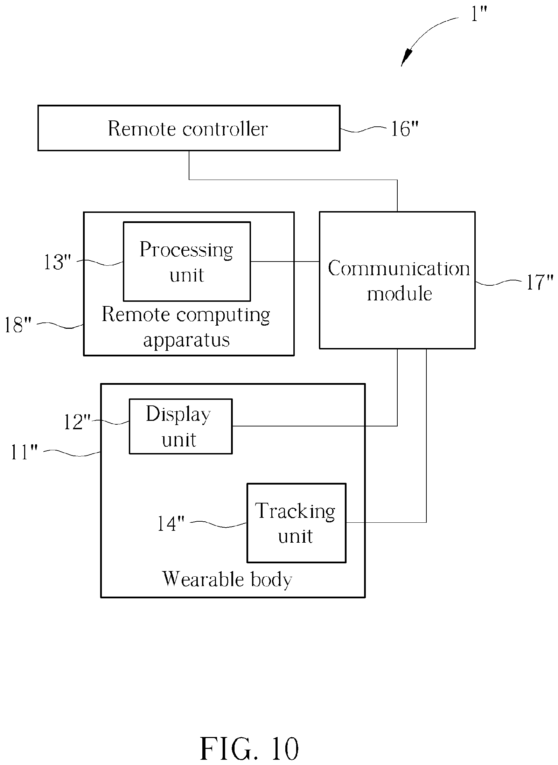

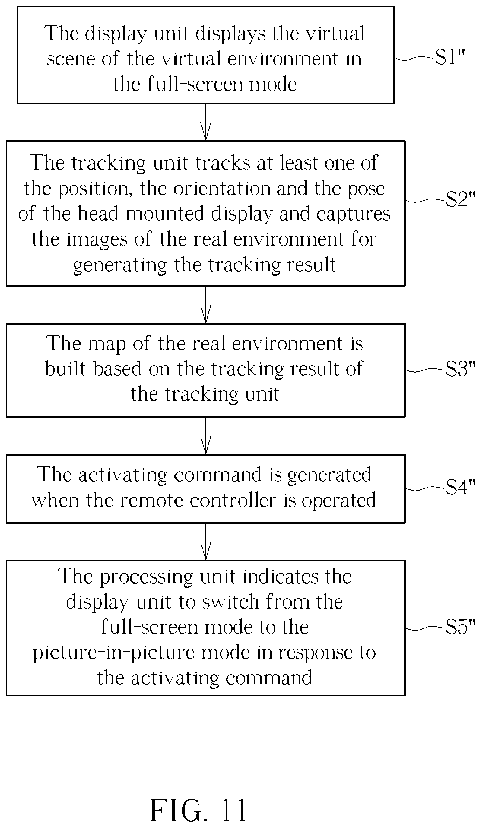

Please refer to FIG. 9 to FIG. 11. FIG. 9 is a diagram of a head mounted display system 1" according to a third embodiment of the present disclosure. FIG. 10 is a functional block diagram of the head mounted display system 1" according to the third embodiment of the present disclosure. FIG. 11 is a flow chart diagram illustrating a method of switching the head mounted display system 1" between a first-person perspective mode and a third-person perspective mode according to the third embodiment of the present disclosure. As shown in FIG. 9 to FIG. 11, different from the head mounted display systems 1, 1' of the aforementioned embodiments, the head mounted display system 1" of this embodiment includes a wearable body 11", a display unit 12", a processing unit 13", a tracking unit 14", a remote controller 16", a communication module 17" and a remote computing apparatus 18". The display unit 12" and the tracking unit 14" are mounted on the wearable body 11". The processing unit 13" can be configured on the remote computing apparatus 18". The communication module 17" constructs a communication channel among the processing unit 13" on the remote computing apparatus 18", the display unit 12" disposed on the wearable body 11", the tracking unit 14" disposed on the wearable body 11" and the remote controller 16". In other words, the processing unit 13" is coupled to the tracking unit 14'" and the display unit 12" by the communication module 17" for receiving the tracking result of the tracking unit 14'" and indicating the display unit 12" to switch between the full-screen mode and the picture-in-picture mode , and the remote controller 16" is coupled to the processing unit 13" by the communication module 17" for generating and transmitting the activating command remotely to the processing unit 13" via the communication module 17" when the remote controller 16" is operated. In other words, in this embodiment, the user can switch the display unit 12" from the full-screen mode to the picture-in-picture mode by operating the remote controller 16" according to practical demands. Furthermore, understandably, the user can switch the display unit 12" from the picture-in-picture mode to the full-screen mode by operating the remote controller 16" again.

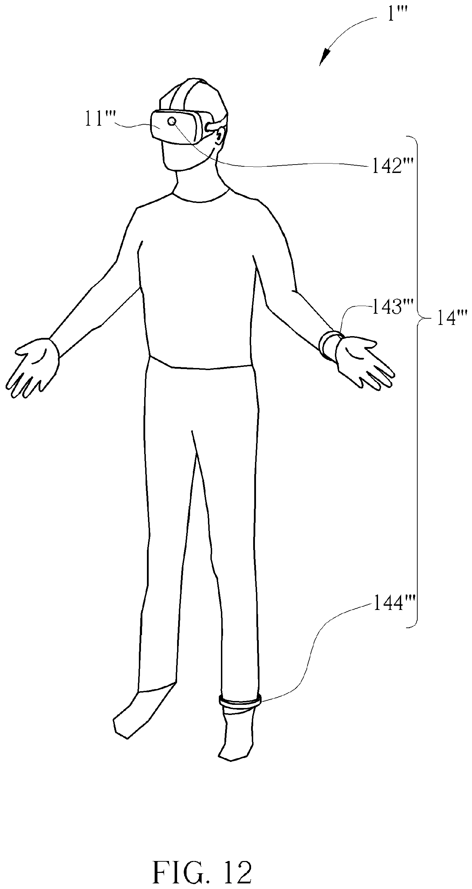

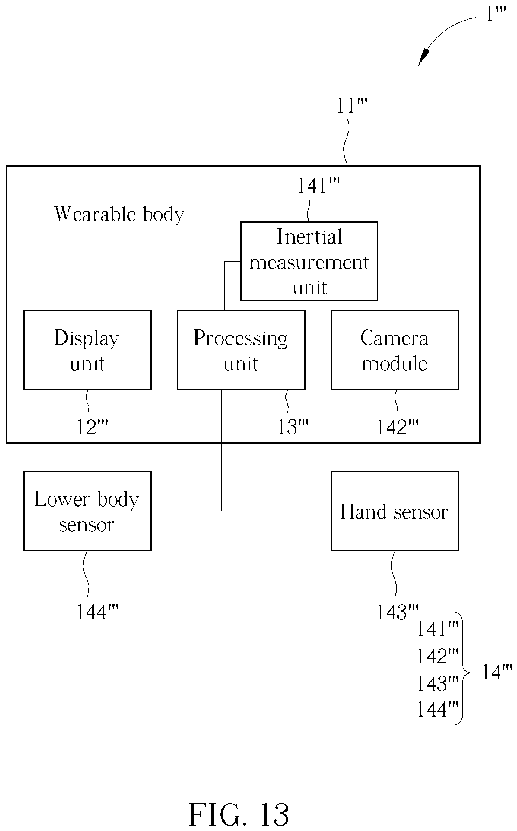

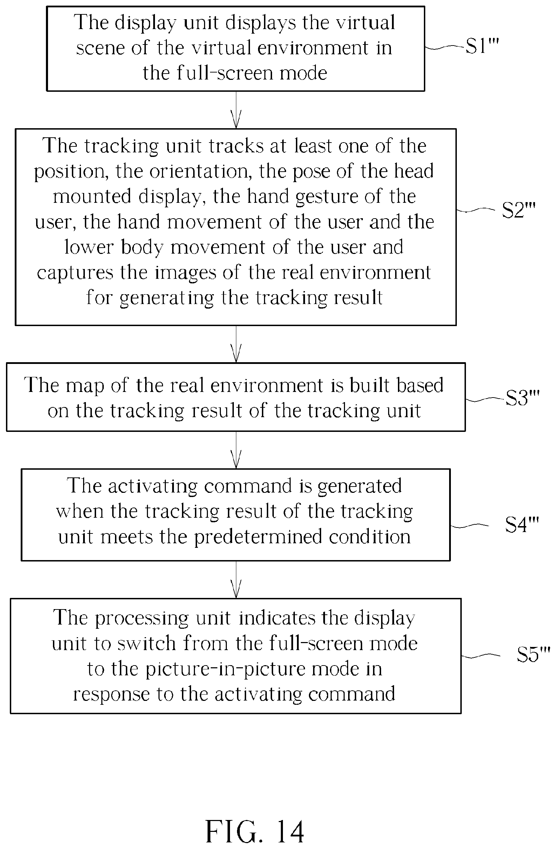

Please refer to FIG. 12 to FIG. 14. FIG. 12 is a diagram of a head mounted display system 1'" according to a fourth embodiment of the present disclosure. FIG. 13 is a functional block diagram of the head mounted display system 1'" according to the fourth embodiment of the present disclosure. FIG. 14 is a flow chart diagram illustrating a method of switching the head mounted display system 1'" between a first-person perspective mode and a third-person perspective mode according to the fourth embodiment of the present disclosure. As shown in FIG. 12 to FIG. 14, different from the head mounted display system 1, 1', 1" of the aforementioned embodiments, the head mounted display system 1'" of this embodiment includes a wearable body 11'", a display unit 12"', a processing unit 13'" and a tracking unit 14"'. The display unit 12'" and the processing unit 13'" can be disposed on the wearable body 11"'. The processing unit 13'" is coupled to the display unit 12"'. The tracking unit 14'" includes an inertial measurement unit (IMU) 141'" mounted inside the wearable body 11 and coupled to the processing unit 13"', a camera module 142'" disposed on the wearable body 11'" and coupled to the processing unit 13"', a hand sensor 143'" worn on the user's hand and coupled to the processing unit 13"', a lower body sensor 144'" worn on the user's lower body and coupled to the processing unit 13'" for tracking at least one of the position of the head mounted display system 1"', the orientation of the head mounted display system 1"', the pose of the head mounted display system 1"', the hand gesture of the user, the hand movement of the user and the lower body movement of the user. In this embodiment, the predetermined condition can refer to the predetermined hand gesture, the predetermined hand movement, the predetermined lower body movement, or a combination thereof. For example, the activating command can be generated when the hand gesture, the hand movement or the lower body movement of the user tracked by the tracking unit meets the predetermined hand gesture, the predetermined hand movement, or the predetermined lower body movement. However, the present disclosure is not limited thereto. In another embodiment, the tracking unit can only include at least one of the inertial measurement unit, the camera module, the hand sensor and the lower body sensor.

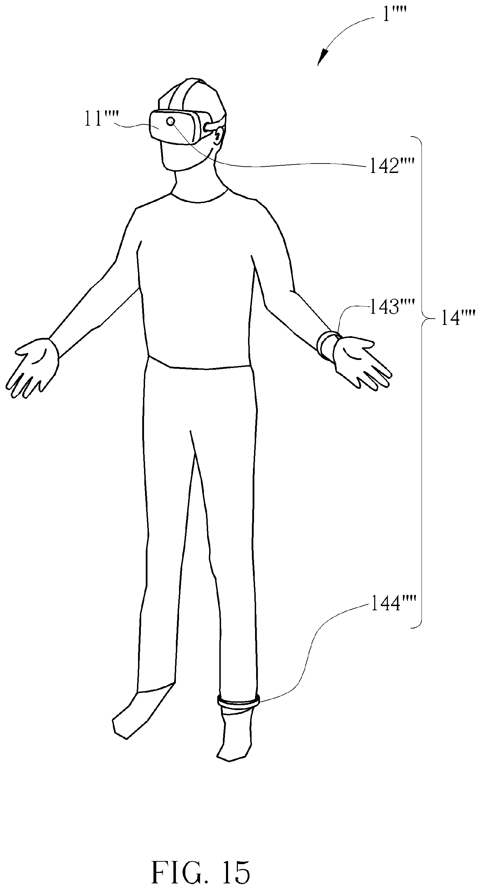

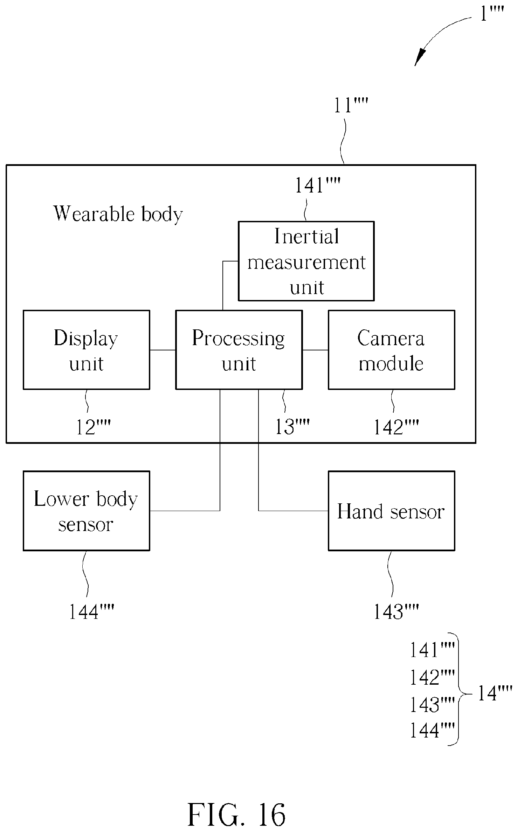

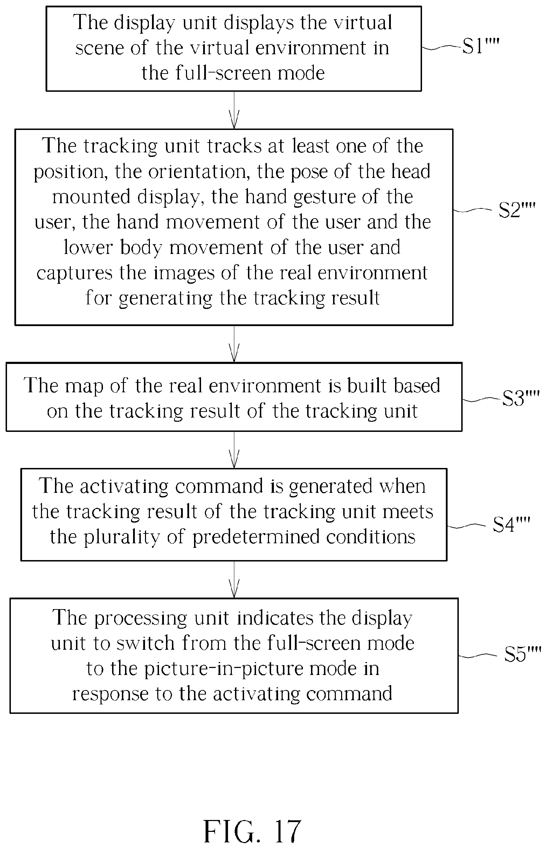

Please refer to FIG. 15 to FIG. 17. FIG. 15 is a diagram of a head mounted display system 1"" according to a fifth embodiment of the present disclosure. FIG. 16 is a functional block diagram of the head mounted display system 1"" according to the fifth embodiment of the present disclosure. FIG. 17 is a flow chart diagram illustrating a method of switching the head mounted display system 1"" between a full-screen mode and a picture-in-picture mode according to the fifth embodiment of the present disclosure. As shown in FIG. 15 to FIG. 17, the head mounted display system 1"" of this embodiment includes a wearable body 11 "", a display unit 12"", a processing unit 13"" and a tracking unit 14"". The display unit 12"" and the processing unit 13"" are disposed on the wearable body 11"". The processing unit 13"" is coupled to the display unit 12"". The tracking unit 14"" includes an inertial measurement unit 141"" coupled to the processing unit 13"", a camera module 142"" mounted on the wearable body 11"" and coupled to the processing unit 13"", a hand sensor 143"" coupled to the processing unit 13"" and worn on the user's hand, and a lower body sensor 144"" coupled to the processing unit 13"" and worn on the user's lower body for tracking at least one of the hand gesture of the user, the hand movement of the user, the lower body movement of the user, the position of the head mounted display system 1"", the orientation of the head mounted display system 1"", the pose of the head mounted display system 1"". The activating command can be generated when a tracking result of the tracking unit 14"" meets a plurality of predetermined conditions. The plurality of predetermined conditions, for example, can include a first predetermined condition and a second predetermined condition. The first predetermined condition can refer to a predetermined distance, a predetermined position of the head mounted display system 1"", a predetermined orientation of the head mounted display system 1"" or a predetermined pose of the head mounted display system 1"", and the second predetermined condition can refer to a predetermined hand gesture, a predetermined hand movement, and a predetermined lower body movement.

In this embodiment, the inertial measurement unit 141"" can be mounted on the wearable body 11"", so that the tracking unit 14"" can track the position, the orientation or the pose of the wearable body 11"" to determine the position, the orientation or the pose of the head mounted display system 1"".

Furthermore, determination of the generation of the activation command can be a multi-stage operation, for example, two-stage operation. For example, when the tracking unit 14"" determines a distance between the wearable body 11"" and a real object is less than the predetermined distance, the tracking unit 14"" further determines whether the hand gesture of the user matches with the predetermined hand gesture. When the tracking unit 14"" determines the hand gesture of the user matches with the predetermined hand gesture, the activating command is generated. However, the present disclosure is not limited to this embodiment. In another embodiment, the determination of the generation of the activation command can be one-stage operation, i.e., the activating command can be generated when the first tracking result and the second tracking result of the tracking unit respectively meet the first predetermined condition and the second predetermined condition at a same time.

Furthermore, the above-described embodiments of the present disclosure can be implemented in software, firmware, hardware configuration, or combination thereof, and it is also possible to provide a non-transitory computer readable storage medium for storing a program that causes a head mounted display system to execute any one of the aforementioned methods by a processor. The processor can be a central processing unit, an application processor, a microprocessor, etc., or can be realized by an application specific integrated circuit (ASIC). The computer-readable recording medium can be a Read-Only Memory (ROM), a random-access memory (RAM), a CD-ROM, a magnetic tape, a floppy disk, or an optical data storage device. However, the present disclosure is not limited thereto.

In contrast to the prior art, the present disclosure utilizes the display unit to display the virtual scene in the full-screen mode or display the virtual scene and the real environment combined in the same video frame synchronously in the picture-in-picture mode and further utilizes the processing unit to indicate the display unit to switch between the full-screen mode and the picture-in-picture mode in response to the activating command. Therefore, it allows the user to switch the display unit between the full-screen mode and the picture-in-picture mode by different ways to help the user to understand the current position or the current state of the user in the real environment, which effectively ensure the user's safety and prevents injuries caused by collision when the user experiences the virtual environment.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A head mounted display system (1, 1', 1", 1"', 1"") comprising:
a wearable body (11, 11', 11", 11"', 11"") configured to be worn by a user; and
**characterized in that** the head mounted display system (1, 1', 1", 1"', 1"") further comprises:
a tracking unit (14, 14', 14", 14"', 14"") configured to track at least one of a position of the head mounted display system (1, 1', 1", 1'", 1""), an orientation of the head mounted display system (1, 1', 1", 1'", 1"") and a pose of the head mounted display system (1, 1', 1", 1'", 1"") and further to generate a tracking result;
a display unit (12, 12', 12", 12'", 12"") mounted on the body and configured to display a virtual scene and a map of a real environment based on the tracking result of the tracking unit (14, 14', 14", 14"', 14"") in a picture-in-picture mode; and
a processing unit (13, 13', 13", 13"', 13"") coupled to the tracking unit (14, 14', 14", 14'", 14"") and the display unit (12, 12', 12", 12'", 12"").

2. The head mounted display system (1, 1', 1", 1"', 1"") of claim 1, **characterized in that** the display unit (12, 12', 12", 12"', 12"") is further configured to display the virtual scene in a full-screen mode, and the processing unit (13, 13', 13", 13'", 13"") is configured to indicate the display unit (12, 12', 12", 12'", 12"") to switch between the full-screen mode and the picture-in-picture mode in response to an activating command.

3. The head mounted display system (1') of claim 2, **characterized in that** the head mounted display system (1') further comprises a switch unit (15') coupled to the processing unit (13') and configured to generate the activating command when a state of the switch unit (15') is changed.

4. The head mounted display system (1") of claim 2, **characterized in that** the head mounted display system (1") further comprises a remote controller (16") communicated with the processing unit (13") and configured to generate the activating command when the remote controller (16") is operated.

5. The head mounted display system (1'") of claim 2, **characterized in that** the tracking unit (14"') is further configured to track at least one of a hand gesture of the user, a hand movement of the user and a lower body movement of the user, and the activating command is generated when the tracking result of the tracking unit (14"') meets at least one predetermined condition.

6. The head mounted display system (1) of claim 1, **characterized in that** the tracking unit (14) is further configured to track at least one of a hand gesture of the user, a hand movement of the user and a lower body movement of the user, and at least one of a size of a window (21) of the map, a location of the window (21) of the map, a scale of the map, an orientation of the map and a view of the map is adjusted when the tracking result of the tracking unit (14) meets a predetermined condition.

7. The head mounted display system (1") of any one of claims 1 and 4, **characterized in that** the head mounted display system (1") further comprises:
a remote computing apparatus (18") not disposed on the wearable body (11"); and
a communication module (17") disposed on the wearable body (11") for constructing a communication channel to the remote computing apparatus (18");
wherein the processing unit (13") is at least partly disposed on the remote computing apparatus (18").

8. The head mounted display system (1") of claim 7, wherein the tracking unit (14") is partly disposed on the remote computing apparatus (18").

9. A method of utilizing a head mounted display system (1, 1', 1", 1'", 1"") to display a virtual scene and a map of a real environment in a picture-in-picture mode, **characterized in that** the method comprises:
utilizing a tracking unit (14, 14', 14", 14'", 14"") of the head mounted display system (1, 1', 1", 11"") to track at least one of a position of the head mounted display system (1, 1', 1", 1"', 1""), an orientation of the head mounted display system (1, 1', 1", 1'", 1"") and a pose of the head mounted display system (1, 1', 1", 1"', 1"") and further to generate a tracking result; and
utilizing a display unit (12, 12', 12", 12"', 12"") of the head mounted display system (1, 1', 1", 1"', 1"") to display the virtual scene and the map of the real environment based on the tracking result of the tracking unit (14, 14', 14", 14'", 14"") in the picture-in-picture mode.

10. The method of claim 9, **characterized in that** the method further comprises:
utilizing the display unit (12, 12', 12", 12'", 12"") to display the virtual scene in a full-screen mode; and
utilizing a processing unit (13, 13', 13", 13"', 13"") of the head mounted display system (1, 1', 1", 1'", 1"") to indicate the display unit (12, 12', 12", 12"', 12"") to switch between the full-screen mode and the picture-in-picture mode in response to an activating command.

11. The method of claim 10, **characterized in that** the method further comprises:
utilizing a switch unit (15') of the head mounted display system (1') to generate the activating command when a state of the switch unit (15') is changed.

12. The method of claim 10, **characterized in that** the method further comprises:
utilizing a remote controller (16") of the head mounted display system (1") to generate the activating command when the remote controller (16") is operated.

13. The method of claim 10, **characterized in that** the method further comprises:
utilizing the tracking unit (14'") to track at least one of a hand gesture of a user, a hand movement of the user and a lower body movement of the user; and
generating the activating command when the tracking result of the tracking unit (14'") meets at least one predetermined condition.

14. The method of claim 9, **characterized in that** the method further comprises:
utilizing the tracking unit (14) to track at least one of a hand gesture of a user, a hand movement of the user and a lower body movement of the user; and
adjusting at least one of a size of a window (21) of the map, a location of the window (21) of the map, a scale of the map, an orientation of the map and a view of the map when the tracking result of the tracking unit (14) meets a predetermined condition.

15. A non-transitory computer readable storage medium storing a program that causes the head mounted display system (1, 1', 1", 1'", 1"") to execute the method of any one of claims 9 to 14.
